Europäisches Patentamt

European Patent Office

Office européen des brevets

(19)

(11) Publication number: **0 312 954**
**A2**

# EUROPEAN PATENT APPLICATION

(12)

(21) Application number: **88117232.4**

(51) Int. Cl.4: **C04B 14/20**

(22) Date of filing: **17.10.88**

(30) Priority: **19.10.87 US 110169**

(43) Date of publication of application:
**26.04.89 Bulletin 89/17**

(84) Designated Contracting States:
**BE DE FR GB IT NL**

(71) Applicant: **HERCULES INCORPORATED**
**Hercules Plaza**
**Wilmington Delaware 19894(US)**

(72) Inventor: **Nelson, Lawrence Lee**
**5532 Doral Drive Fairway Falls**
**Wilmington Delaware 19808(US)**

(74) Representative: **Lederer, Franz, Dr. et al**
**Van der Werth, Lederer & Riederer**
**Patentanwälte Lucile-Grahn-Strasse 22**
**D-8000 München 80(DE)**

(54) **Process for exfoliation of vermiculite.**

(57) A process for producing an aqueous dispersion of vermiculite ore particles is provided, which substantially eliminates the non-desirable gel formation that can occur after organo-cation exchange and during the washing of the ore particles to promote swelling, by including an electrolyte in solution that maintains the ionic strength of the washing suspension at least .003 molar.

EP 0 312 954 A2

Xerox Copy Centre

# PROCESS FOR EXFOLIATION OF VERMICULITE

This invention relates to a process for making aqueous dispersions of vermiculite lamellae or platelet.

It is known that aqueous suspensions of swollen vermiculite ore particles can be prepared by substituting monovalent inorganic cations such as $Li^+$ or $Na^+$ for exchangeable cations in the ore (for example, $Mg^{2+}$ cations), followed by a subsequent step of aqueous washing of the cation-exchanged ores to remove excess salt and swell the macroscopic ore particles. It is also known to subject the swollen ore particles in water to a mechanical shearing action that delaminates the vermiculite structure and produces an aqueous dispersion of tiny particles of vermiculite known as vermiculite lamellae or platelets.

The term "vermiculite" refers to all layer minerals known as vermiculite in mineralogical or commercial contexts, and includes minerals consisting wholly or largely of vermiculite, including minerals of a mixed-layer type (phyllosilicates) that contain vermiculite layers as a constituent (such as hydrobiotites and chlorite-vermiculites) and that can be delaminated in the same way as vermiculite. While vermiculite is the preferred layer mineral, other layer minerals may be delaminated, including montmorillonite, kaolinite and clays comprising sepiolite, kaolinite, and other layer silicate minerals that can be delaminated to produce lamellae or plate-like particles.

Vermiculite lamellae or platelets have a particle size typically less than 200 microns, preferably less than 50 microns, have a thickness dimension that is small compared to the other two dimensions, and have an "aspect ratio" (i.e., length or breadth divided by thickness) of at least 10, preferably at least 100 and more preferably at least 1,000, for example, 10,000.

Because lithium salts are expensive, compared to sodium chloride for instance, the latter is more commonly used in the treatment of vermiculite particles, based on its low cost, availability and lack of environmental impact. Sodium chloride is preferably the salt which is used in the exchange treatment of vermiculite particles, because ofits availability and low cost. Processes for producing sodium exchanged vermiculite are well known.

$Na^+$-exchanged ores, however, lack the swelling potential of $Li^+$-exchanged ores, and the $Na^+$ cations are conventionally replaced by an organo-cation, such as an organo-substituted ammonium cation, in a second exchange step that intercalates the organo-cations into the vermiculite structure. The second exchange step is followed by a second aqueous washing step to swell the vermiculite ore particles to an adequate degree, to at least twice its original volume. They are then subjected to a shearing step to delaminate them and produce vermiculite lamellae of an appropriate size, which is generally preferred to be less than 50 microns.

U.S. Patent 4,608,303 and in U.K. Patent 1,593,382 disclose such a process, in which $Na^+$-exchanged vermiculite ores are contacted with an aqueous solution of butylammonium chloride in a second exchange step. That second exchange step is followed by aqueous washing to swell the ore prior to delamination by shearing, and further to remove excess ammonium salts.

It is conventionally preferred, in such processes, to perform the second exchange step with an aqueous solution in which the concentration of the organo-cation is higher than that of the exchangeable ions in the $Na^+$-exchanged vermiculite ore. The swelling of the ore is conventionally allowed to proceed to at least four times its original volume, and in some aspects, six times the ore's original volume before shearing.

However, such known methods using $Na^+$-exchanged vermiculite ores can be hampered by the formation of a gel during the aqueous washing step following the second cation exchange step. As a result, removal of water and excess salts from the gels prior to shearing, and delamination of the swollen ore particles, becomes extremely difficult. There is a need for an improved process for chemically exfoliating $Na^+$-exchanged vermiculite ore without undesirable gel formation.

According to the invention, a process for exfoliating vermiculite ore that includes the steps of contacting $Na^+$-exchanged vermiculite ore with an aqueous solution of a salt of an organo-cation, washing the ore particles in suspension with water, and delaminating the ore particles by subjecting the suspension of particles to a shearing action to produce vermiculite lamellae, is characterized in that the aqueous suspension of the ore particles in the washing step contains an electrolyte in solution that maintains the ionic strength of the suspension at at least .003 molar as determined by the formula:

IONIC STRENGTH = $1/2 \ \Sigma_i(C_i(Z_i)^2)$

in which C is the molar concentration of the ith ion of valence charge Zi, summed for all ions present.

For the critical feature of this invention, to maintain the ionic strength of the aqueous suspension of organo-cation intercalated ore during the washing step at about .003 molar or greater to prevent the occurrence of non-desirable gelation, while allowing the vermiculite ore to swell to an adequate degree while excess organo-cations are removed, the preferred electrolytes are
AlCl₃, Al₂(SO₄)₃,FeCl₃, FeCl₂,
MgCl₂, FeSO₄, NH₄Cl, Na₂SO₄, K₂SO₄,
K₂S₂O₇, KCl, NaCl, or LiCl,

with $Fe+3$ and $Al+3$ being the most preferred cations. The order of effectiveness of cations in decreasing order can be represented as follows:

$$Al^{+3} \cong Fe^{+3} \cong Mg^{+2} \cong Ca^{+2} \cong FE^{+2} > K^{+} \cong Na^{+} > H^{+}$$

The amount of electrolyte in solution employed during the washing step will vary, depending upon such variables as the particular electrolyte employed, the level of organo-cations exchanged for sodium ions initially intercalated in the vermiculite ore and the concentration of organo-cation-exchanged vermiculite ore present. However, the minimum range of amounts necessary to maintain the ionic strength of the aqueous suspension of vermiculite ore particles at about .003 molar or greater during the washing step, and the need for a higher ionic strength, depending on the effectiveness of the particular electrolyte to control gelation, can easily be determined by trial.

Specific examples of organo-cation salts known from prior art to exfoliate vermiculite and useful in the practice of this invention include:
n-butylammonium,
iso-butylammonium,
propylammonium,
iso-amylammonium,
crotyltriethylammonium,
allylammonium,
methacryloxyelthyltrimethylammonium,
3-acryloxyneopentyltrimethylammonium,
2-methacryloxyethyl-t-butylammonium,
diallylammonium,
diallyldimethylammonium
allyldimethylsulfonium,
methacrylamidopropyltrimethylammonium,
acrylamidopropyltrimethylammonium,
butenyltrimethylammonium,
vinylpyridinium ions such as
N-methyl-2-vinylpyridinium,
vinylbenzyldimethylsulfonium,
vinylbenzyltrimethylammonium,
2,3-epoxypropyltrimethylammonium,
triethylvinylphosphonium,
tributylvinylphosphonium,
α-ammonium-α-butyrolactone,
glycidyltrimethylammonium,
1-methyl-1-tert-butylaziridinium, and
1-ethyl-1,3,3-trimethyl azetidinum.

Of the various organo-cation salts capable of exfoliating vermiculite, the ones that are preferred as being the most effective in practicing the present invention are salts of alkylammonium compounds having between 3 and 6 carbon atoms in each alkyl group, especially those of allylammonium, n-butylammonium, iso-butylammonium, propylammonium and isoamylammonium.

The concentration of vermiculite ore in the aqueous suspension of the ore particles in the washing step is preferably in the range from 1% to about 70%, and more preferably in the range from about 10% to about 30%, based on the weights of water and dry vermiculite.

The temperature at which the $Na^{+}$-exchanged vermiculite ore is contacted with the aqueous solution of the salt of an organo-cation in the exchange step is not critical, but is preferably above ambient temperature. It is more preferable, however, to reflux the aqueous salt solution with the vermiculite ore.

The ratio of molar concentration of the organo-cation in the aqueous solution to that of exchangeable sodium cations in the vermiculite ore, in a preferred embodiment of this invention can range from about 1.0 to about 40, most preferably from about 3 to about 25. The molar ratios can depend upon, for example, the weight percent of vermiculite ore present and the degree of cation exchange desired.

In washing the organo-cation-exchanged ore particles, the organo-cation intercalated vermiculite ore is allowed to swell or expand to up to six times the ores original volume, while excess non-intercalated salts are washed away in a conventional manner.

The shearing step following washing to delaminate the vermiculite ore particles can be accomplished by any conventional shearing device that is suitable. For example, a rotary paddle, cowles blade, colloid mill or similar type of shearing macerator may be employed during this step in the present invention, including a Warring Blender or a macerator of the type similar to those used for domestic purposes.

Dispersions of vermiculite lamellae produced in accordance with the instant invention can be used to manufacture any of the many shaped articles comprising vermiculite that are disclosed in the prior art. Such articles include films, paper, gasket material, composites, and non-sheet articles such as rigid foams.

The following examples illustrate a preferred embodiment of the instant invention for the process of producing dispersions of vermiculite lamellae.

Example I

Preparation of Sodium Exchanged Vermiculite Ore

Grade 4 vermiculite ore (ASTM Material Designation C-516) is digested at 20 weight percent solids in a saturated sodium chloride solution at reflux for four hours, cooled to room temperature, then filtered. Excess salts are removed from the filtrate by washing with distilled water.

Example II - Control

300 grams of sodium exchanged vermiculite ore prepared in accordance with Example I is digested with agitation in 1.5 liters of 2 molar allylammonium chloride (AAC) solution at 80°C for four hours, then cooled to room temperature and allowed to settle. The supernatant is removed by siphoning. 1500 milliliters of distilled water is next added to wash out excess AAC and to promote swelling of the vermiculite ore, and the suspension stirred for five minutes. After settling 10 minutes, the supernatant is siphoned from the solids. The above washing step is then repeated four times with changes in AAC solution concentrations and ore volumes recorded and summarized in Table I below.

TABLE I

| Wash No. | Ore Volume (CC) | ACC (M) |
|---|---|---|
| 1 | 275 | 2.0 |
| 2 | 350 | 0.5 |
| 3 | 700 | 0.14 |
| 4 | 1175 | 0.05 (4700 ppm) |
| 5 | 3000 | 0.02 (1900 ppm) |

After repeating the washing procedure a fourth time, which reduces the ACC molar concentration to about 4700 ppm, a stable non-settling gel structure develops which inhibits further removal of excess salts.

Example III

Washing With An Electrolyte Solution

4

1800 grams of a 20 weight percent solids suspension of allylammonium chloride exchanged vermiculite ore is prepared according to the procedure set forth in Example II. 60 grams of the suspension is removed and washed three times with 300 cc of distilled water, during which the ore swells three to four times in volume and the solution ionic strength is reduced from 2 molar to approximately 0.07 molar. The partially swollen ore is then washed three times with the designated electrolyte solution and the percent change in ore volume, molar concentration of electrolyte and ionic strength (molar concentration of charges in the washing solution), and residual excess organo-cation (ACC) solution concentration are recorded and summarized in Table II below.

This data demonstrates that at least a two to tenfold decrease in allylammonium chloride concentration can be achieved by employing electrolyte washing solutions in accordance with this invention. The data further demonstrates that maintenance of the ionic strength of the electrolyte washing solution at above 0.003 molar or greater insures additional ore swelling without concomitant gel formation.

TABLE II

| Salt | Concentration[**] (molar) | Ionic Strength[**] (molar) | Ore Volume Expansion (%) | ACC[***] (molar) |
|---|---|---|---|---|
| Control | - | - | 275[*] | 0.014 |
| A. Chlorides | | | | |
| AlCl₃ | 0.005 | 0.03 | 15 | 0.007 |
| | 0.00125 | 0.0075 | 225 | 0.004 |
| FeCl₃ | 0.00125 | 0.0075 | 330 | 0.007 |
| MgCl₂ | 0.015 | 0.045 | 30 | 0.013 |
| | 0.005 | 0.015 | 47 | 0.007 |
| | 0.0025 | 0.0075 | 90 | 0.003 |
| | 0.00125 | 0.00375 | 175 | 0.002 |
| CaCl₂ | 0.00125 | 0.00375 | 140 | 0.015 |
| FeCl₂ | 0.00125 | 0.00375 | 160 | 0.009 |
| KCl | 0.025 | 0.025 | 32 | 0.004 |
| | 0.0125 | 0.0125 | 43 | 0.008 |
| | 0.0063 | 0.0063 | 60 | 0.008 |
| | 0.003 | 0.003 | 175 | 0.002 |
| HCl (pH = 2) | 0.01 | 0.01 | 130 | 0.006 |
| B. Sulfates | | | | |
| Al₂(SO₄)₃ | 0.003 | 0.05 | 22 | 0.009 |
| | 0.002 | 0.03 | 0 | 0.003 |
| Na₂SO₄ | 0.0125 | 0.04 | 133 | 0.001 |
| | 0.0063 | 0.02 | 122 | 0.003 |
| FeSO₄ | 0.00125 | 0.005 | 140 | 0.011 |
| H₂SO₄ | 0.5 | 1.5 | 0 | 0.005 |
| K₂S₂O₇ | 0.003 | 0.009 | 140 | 0.003 |

[*] indicates gel formation
[**] molar concentration and ionic strength of wash solution
[***] molar concentration of AAC in washed and swollen ore dispersion

**Claims**

1. A process for exfoliating vermiculite ore that includes the steps of contacting Na⁺-exchanged vermiculite ore with an aqueous solution of a salt of an organo-cation, washing the ore particles in suspension with water, and delaminating the ore particles by subjecting the suspension of particles to a shearing action to produce vermiculite lamellae, characterized in that the aqueous suspension of the ore particles in the washing step contains an electrolyte in solution that maintains the ionic strength of the suspension at at least .003 molar, as determined by the formula:

IONIC STRENGTH = $1/2 \ \Sigma_i(C_i(Z_i)^2)$

in which C is the molar concentration of the ith ion of valence charge Zi, summed for all ions present.

2. A process for exfoliating vermiculite ore as claimed in claim 1, further characterized in that the electrolytes are

$AlCl_3$, $Al_2(SO_4)_3$, $FeCl_3$, $FeCl_2$,

$MgCl_2$, $FeSO_4$, $NH_4Cl$, $Na_2SO_4$, $K_2SO_4$,

$K_2S_2O_7$, KCl, NaCl, or LiCl.

3. A process for exfoliating vermiculite ore as claimed in claim 1, further characterized in that the electrolytic cations are $Fe^{+3}$ and $Al^{+3}$.

4. A process for exfoliating·vermiculite ore as claimed in claim 1, 2 or 3, further characterized in that the salt of an organo-cation is a salt of an alkylammonium compound having between 3 and 6 carbon atoms in each alkyl group.

5. A process for exfoliating vermiculite ore as claimed in any of the preceding claims, further characterized in that the salt of an alkylammonium compound is an allylammonium, n-butylammonium, iso-butylammonium, propylammonium or isoamylammonium chloride or sulfate.